# EUROPEAN PATENT APPLICATION

(11) **EP 0 626 610 A1**
(43) Date of publication of application: **30.11.1994**
(21) Application number: 94303853.9
(22) Date of filing: 27.05.1994
(51) Int. Cl.: G03B 13/04

(54) **Camera with optically isolated dual viewfinders**

(30) Priority: 28.05.1993 US 68884
(71) Applicant: FISHER-PRICE, INC., East Aurora, New York 14052-1885 (US)
(72) Inventor: Shuler, Eric T, Orchard Park, New York 14127 (US); Murphy, Patrick J., East Aurora, New York 14052 (US)
(74) Representative: Price, Nigel John King

(57) **Abstract**

A camera has a camera body (100) and a viewing system disposed on the body. The viewing system has two framing conduits (128, 130) by which the user can properly frame an image to be captured. Each of the framing conduits has an image receiving aperture (140, 142) at one end and an image viewing aperture (116, 118) at the opposite end. The conduits are optically isolated from each other, in that an image entering the receiving aperture of one conduit cannot be viewed at the viewing aperture of the other conduit. The viewing conduits are preferably devoid of optical elements.

## Description

The invention relates to cameras, and specifically to a still photographic camera having dual viewfinders that are optically isolated from each other.

Still photographic cameras conventionally include a viewfinder through which the user views the image to be captured by the camera (such as on conventional photographic film or on a solid-state image array such as a charge-coupled device, or CCD). Typically, a single viewfinder is used. That is, a single viewing aperture is provided on the rear of the camera. In cameras of the single lens reflex ("SLR") type, the single viewing aperture of the viewfinder is optically coupled to the camera's main lens (the lens that focuses the image for capture by the camera). Thus, the image to be captured is conducted to the viewing aperture of the viewfinder via the main lens. SLR cameras use a complex and precise mechanism to coordinate the viewing function of the viewfinder with the focusing function of the main lens -- the camera incorporates an optical mechanism that moves a mirror to redirect the image from the viewfinder to the image-capturing mechanism (film or solid-state array). An earlier and less complex system uses a single viewfinder that is optically isolated from the main lens. The viewfinder has an image-receiving aperture on the front of the camera that is separate from the main lens. The viewfinder simply allows the user to frame the image to be captured, while the focusing and aperture settings must be made by measurement or estimation rather than by eye (as in the SLR).

When using a camera with a viewfinder having a single viewing aperture (whether SLR or otherwise), the user typically closes the eye not being used to view the image through the viewfinder. Some cameras (those of the rangefinder type) employ a viewfinder with two viewing apertures as part of a range-finding system to allow the user to more easily focus the camera. In such rangefinder cameras, the dual viewing apertures are optically coupled, the image's range or distance being determined by the parallax between the two image receiving apertures of the viewfinder.

A camera intended for use by children should be rugged and relatively inexpensive. The delicate and expensive optics associated with the viewfinders of typical SLR or rangefinder cameras are therefore unsuitable for a child's camera. Instead, it is preferable to use a simpler viewfinder that requires few or no optical elements (optical elements being considered in this application to be elements used in the camera for the purpose of refracting, diffracting, or reflecting light). However, a conventional single-viewfinder camera is difficult for children to use because children have difficulty coordinating the closing of the one eye while viewing the object to be photographed through the single view finder.

There is therefore a need for a camera with an optically simple viewfinder system that has two viewing apertures to allow the user to view the object to be photographed with both eyes open.

Another aspect of conventional cameras that renders them less suitable for children is the camera's shape. The shape of a camera is generally dictated by the need to adequately house the internal workings of the camera. In general, the most suitable shape is that of a rectangular box-like shape. When holding such a camera for taking a picture, the user typically grips and holds the camera at least on one side. This is acceptable for an adult, however, it does not lend itself to use by a child because children typically have not yet developed the coordination or hand strength to easily hold a camera with such a shape.

There is therefore a need for a camera that is shaped to allow the user to easily hold the camera and to keep it steady during exposure of the film.

The needs identified above are met with the camera of the present invention. The camera has a body and a viewfinder fixed to that body. The viewfinder has two viewing conduits, each of which has a receiving aperture at one end and a viewing aperture at the opposite end. The conduits are optically isolated in that an image entering the receiving end of one conduit cannot be viewed at the viewing end of the other conduit. The conduits are preferably devoid of optical elements, and may include transparent but non-optical elements to close the ends of the conduits to prevent entry of foreign matter.

The camera may also have a body wherein right and left sides of the body include a smooth external surface. Each of the right and left sides also include smooth, contoured openings, the openings being a size suitable for allowing a child s hand to grip the right and left sides of the body.

The present invention will be further described hereafter with reference to the following description of an exemplary embodiment and the accompanying drawings in which:

Fig. 1 is a front elevational view of a camera in accordance with the present invention.

Fig. 2 is a back elevational view of the camera shown in Fig. 1.

Fig. 3 is left side view of the camera shown in Fig. 1.

Fig. 4 is a right side view of the camera shown in Fig. 1.

Fig. 5 is a top plan view of the camera shown in Fig. 1.

Fig. 6 is a bottom plan view of the camera shown in Fig. 1.

Fig. 7 is a vertical cross-section along line 7-7 of Fig. 1.

Fig. 8 is a horizontal cross-section along line 8-8 of Fig. 3.

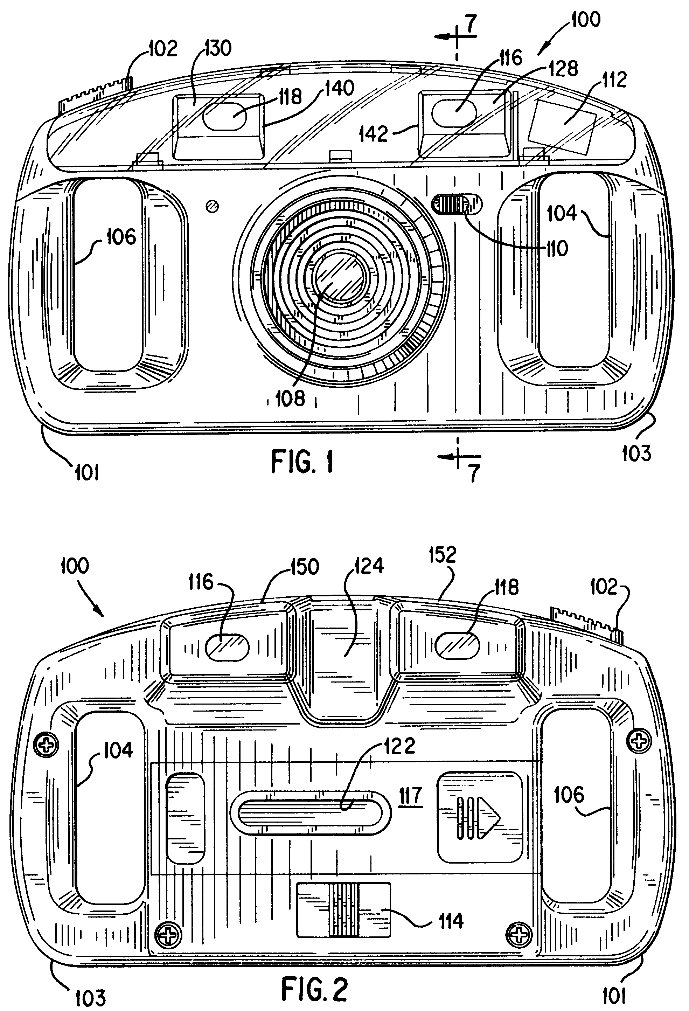

A camera constructed in accordance with the principles of the present invention is depicted in Figs. 1-8. It includes a camera body 100 having a right side 101 and a left side 103. Each side 101, 103 includes a smoothly contoured opening 106, 104 that is sized to allow a child's hand to easily and comfortably grip both sides of the camera. The outermost surface of each of the sides 101, 103 also have a smooth contour so as to further allow the child to grip each side comfortably. Thus, a child can easily and comfortably hold the camera when taking a photograph, reducing the chance that the child will shake the camera and blur the exposure.

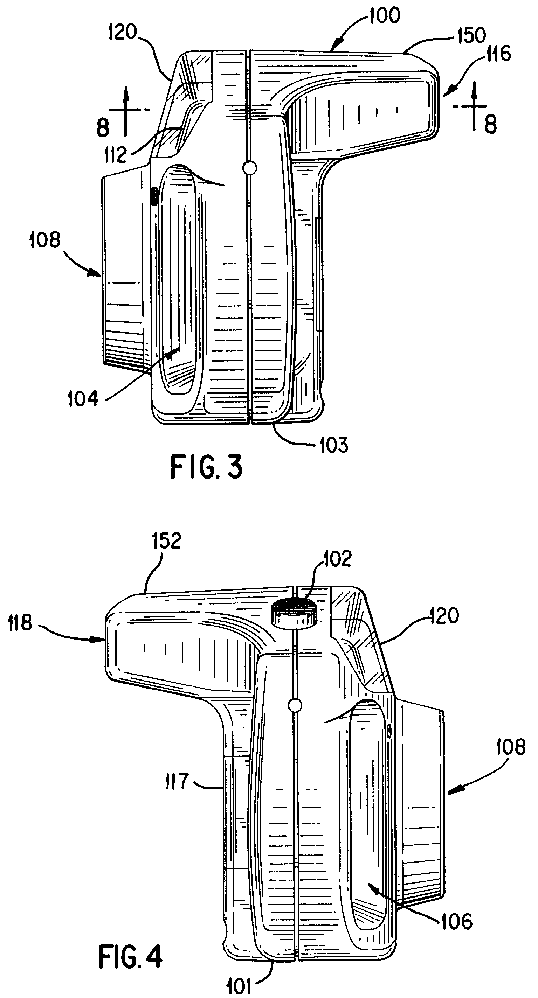

Disposed on a front side of the camera body 100 is a camera lens 108, an electronic flash 112 and a switch 110 for the electronic flash. As depicted in Fig. 3, the lens 108 protrudes forwardly from the front face of the camera body 100 and the electronic flash 112 is mounted in a recessed region of the front face above the lens 108. The recessed region of the camera body 100 is enclosed by a substantially transparent but non-optical canopy 120 that extends substantially the distance between the left and right sides of the camera body 100 as shown in Fig. 1.

A viewing system is mounted above the lens 108 and includes a right framing conduit 130 and a left framing conduit 128 as depicted in Figs. 1, 2, 5, 7 and 8. Each framing conduit includes an image receiving aperture 140, 142, respectively, and an image viewing aperture 118, 116, respectively. Shrouding the image receiving aperture 140, 142 of each framing conduit on the front face of the camera body 100 is the substantially transparent canopy 120. Similarly, the other end of each framing conduit 130, 128 (at or near image viewing apertures 118, 116) may be shrouded or closed by substantially transparent, but non-optical, covers 119, 115, respectively. Thus, the ends of the conduits can be closed at both ends to prevent entry of foreign matter.

With reference to Figs. 1, 2, 5, 7 and 8, each of the framing conduits 130, 128 is optically isolated from the other, in that an image entering through the receiving aperture 140 of the right framing conduit 130 is viewable only at the viewing aperture 118 of the right framing conduit 130. Similarly, an image entering through the receiving aperture 142 of the left framing conduit 128 is viewable only at the viewing aperture 116 of the left framing conduit 128. There is no optical "sharing" of images between the framing conduits.

Such a viewing system avoids the complexities of viewfinders used on more sophisticated cameras (such as SLR and rangefinder cameras) yet provides guidance for the child user to properly frame the desired image. Consequently the cost of the camera can remain economically viable while still providing advantages to the child user.

With this type of system, the user is able to frame the image more accurately because the user can use both eyes (rather than squinting to close one eye as required with typical single viewfinders) to view the image through the framing conduits. In addition, the user is not confused by peripheral optical images on the eyes since the system isolates the viewing paths of one eye from the other. In short, the viewing system enables a user to take a picture through normal, uncorrected viewing while still providing guidance on how to effectively and properly frame the desired image.

On the back side of the camera body 100 is a left conduit housing 150 for the left framing conduit 128 and a right conduit housing 152 for the right framing conduit 130. Both conduit housings 150, 152 protrude outwardly from the back side of the camera body 100. The two conduit housings 150, 152 are separated by an indentation 124 for receiving the bridge of the user s nose.

The back side of the camera body also includes a film access panel 117 that can be slid open to allow loading and unloading of a film cartridge (not shown) into the camera body. The access panel 117 includes an elongated aperture 122 that allows viewing of the frame number of the film cartridge. A winding lever 114 is disposed below the access panel 117 and serves the function of advancing the film to the next frame after each exposure.

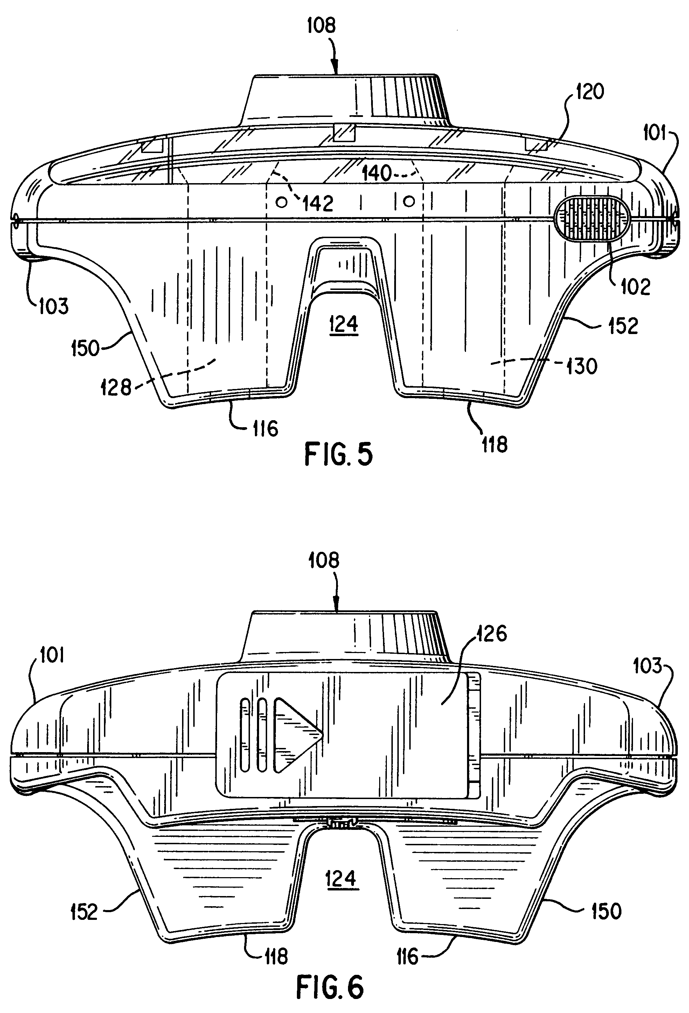

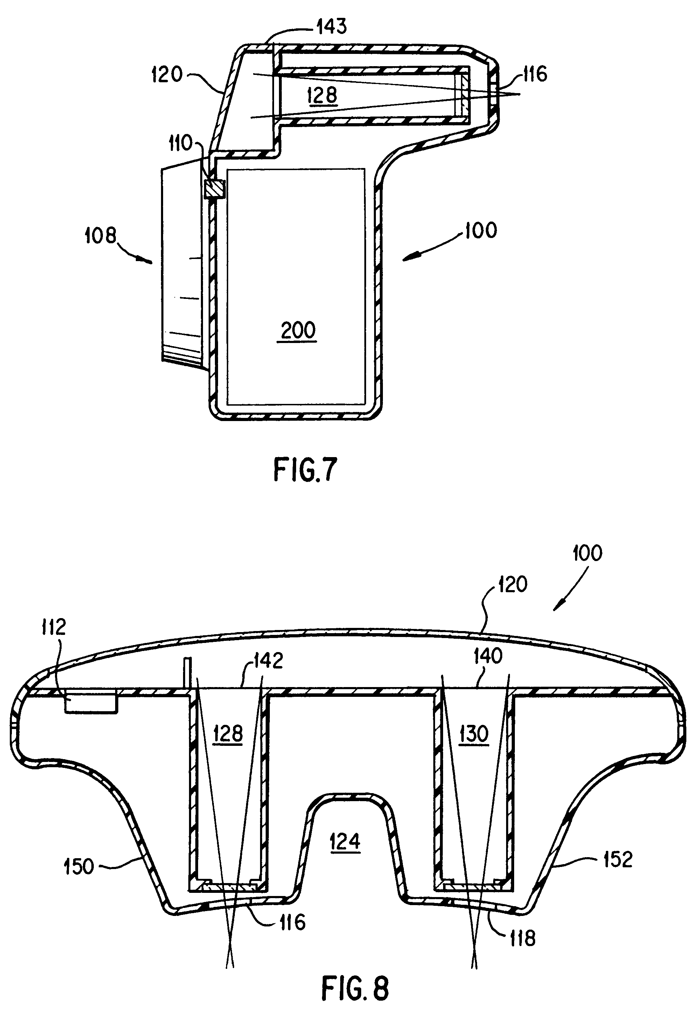

With reference to Fig. 5, a shutter release button 102 is mounted on the top surface of the camera body 100. With reference to Fig. 6, a battery access panel 126 is mounted on the bottom surface of the body 100. The battery provides electronic power to the electronic flash 112.

The internal mechanism of the illustrated camera includes substantially the structure of a standard "110" format camera mechanism which is represented schematically as item 200 in Fig. 7. Therefore, the camera uses standard "110" format photographic film.

In operation, the user loads film cartridge into the camera through the access panel 117. After advancing the film to the first frame by moving the winding lever 114, the camera is ready for use. The user views the image to be captured through the viewing system of the framing conduits 128, 130 and frame the image accordingly. When satisfied with the framing of the image, the shutter release button 102 is pressed to release the shutter and expose the film with the image. When ambient light is low, the user can activate the electronic flash 112 by moving the flash switch 110 to the "on" position.

## Claims

1. A camera comprising:
a camera body (100); and
a viewing system disposed on said body, characterised in that said viewing system has two framing conduits (128, 130) with which a user can frame an image to be photographed, each of said framing conduits having an image receiving aperture (140, 142) at one end thereof and an image viewing aperture (116, 118) at the opposite end thereof, said conduits being optically isolated from each other.

2. A camera according to claim 1 wherein the framing conduits are devoid of optical elements.

3. A camera according to claim 1 or 2 wherein the optical axis of each framing conduit is a straight line.

4. A camera according to claim 1, 2 or 3 wherein the framing conduits are devoid of focusing elements.

5. A camera according to claim 1, 2, 3 or 4 wherein the camera body (100) is generally cuboid and the optical axis of the framing conduits are generally perpendicular to the major surfaces of the main body.

6. A camera according to any one of the preceding claims wherein the optical axis of the framing conduits are substantially perpendicular to the focal plane of the main engaging optical system of the camera.

7. A camera according to any one of the preceding claims, wherein said camera body includes a conduit housing (150, 152) for each of said framing conduits, said conduit housings protruding outwardly from a back surface of said camera body and being separated from each other by a indentation (124) for receiving the bridge of the user s nose.

8. The camera of claim 1, wherein said camera body has openings (106, 104) through the right and left sides thereof sized to receive a child's hand for gripping each side of the camera body.

9. A camera according to any one of the preceding claims, further comprising a substantially transparent window (115, 119) disposed in each of said conduits proximate said viewing aperture to close said conduit.

10. A camera according to any one of the preceding claims, further comprising a substantially transparent canopy (120) extending substantially across the width of said camera body and covering said image receiving aperture of each framing conduit.

11. A camera according to any one of the preceding claims, further comprising a substantially transparent canopy (120) disposed on said body and coupled to said viewing system and enclosing a volume therebetween, said viewing apertures opening into said volume.
